(19) Europäisches Patentamt
European Patent Office
Office européen des brevets

(11) **EP 4 464 398 A1**

(12) **EUROPEAN PATENT APPLICATION**

(43) Date of publication:
**20.11.2024 Bulletin 2024/47**

(21) Application number: 23315202.4

(22) Date of filing: **17.05.2023**

(51) International Patent Classification (IPC):
**B01D 46/44** (2006.01)    **B01D 46/00** (2022.01)

(52) Cooperative Patent Classification (CPC):
**B01D 46/444; B01D 46/0086; B01D 46/442;**
B01D 2267/40; B01D 2273/10; B01D 2273/30

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **MANN+HUMMEL Ventures Pte. Ltd. Singapore 139234 (SG)**

(72) Inventors:
• **GEORGELIN, Nathan**
  139234 Singapore (SG)

• **ZENNER, Julien**
  139234 Singapore (SG)
• **MICHEL, Christiane**
  139234 Singapore (SG)
• **SCHOCH, Marcel**
  139234 Singapore (SG)
• **GROTZ, Maximilian**
  139234 Singapore (SG)

(74) Representative: **Mann + Hummel Intellectual Property**
**Mann + Hummel**
**International GmbH & Co. KG**
**Schwieberdinger Straße 126**
**71636 Ludwigsburg (DE)**

(54) **A SYSTEM, CONTROL DEVICE, AND METHOD FOR DETERMINING A LOADING STATUS OF AN AIR FILTER OF AN AIR FILTER DEVICE**

(57)     Disclosed is an air filtration system for filtering air of an enclosed volume comprising a channel for receiving external air; a recirculation channel for receiving recirculated air from the enclosed volume; an air filter device for filtering an air flow into the enclosed volume, the air flow comprising at least one of the external air and the recirculated air; and an electronic control unit for determining a loading status of at least one air filter of the air filter device, based on: a level of particulate pollution in the external air, a level of particulate pollution in the recirculated air, a flow of the external air in the channel, a flow of the recirculated air in the recirculation channel, and an efficiency of the at least one filter of the air filter device. Further disclosed is a control device for the system, and a method for operating the system.

FIG. 1

EP 4 464 398 A1

**Description**

**Technical Field**

The present disclosure relates to an air filtration system and a method of operating said air filtration system, the air filtration system for filtering air of an enclosed volume. The air filtration system may include an electronic control unit configured to determine a loading status of at least one air filter of an air filter device.

**Background Art**

The following discussion of the background art is intended to facilitate an understanding of the present disclosure only. It should be appreciated that the discussion is not an acknowledgement or admission that any of the material referred to was published, known or is part of the common general knowledge of the person skilled in the art in any jurisdiction as of the priority date of the disclosure.

Air filter devices may be employed for air filtration in indoor air quality management systems and in heating, ventilation and air-conditioning (HVAC) devices. For example, air filter devices can be used as cabin air filters for vehicles. Typically, an air filter device includes a plurality of air filters, each air filter having a loading status that differs from a loading status of another air filter of the air filter device.

Due to properties such as the number and/or arrangement of each air filter of the air filter device, it is difficult for a user to determine, in real-time, a loading status for each air filter of the air filter device. This results in ambiguity regarding the change interval and/or predicting the remaining lifetime for each air filter of the air filter device.

Accordingly, there exists a need for an improved system that seeks to address at least one of the aforementioned issues.

**Summary**

The disclosure was conceptualized to provide an improved air filtration system for filtering air of an enclosed volume, the system having an electronic control unit configured to determine a loading status of at least one air filter of the air filter device in real-time or near real-time. To this end, the improved system enables a user to easily determine the loading status of, in particular, the total particulate pollutant mass that is collected or flows through each air filter of the air filter device, thereby providing real-time monitoring of the loading status and operating condition of each air filter of the air filter device. The disclosure thus provides an air filtration system that enables the determination of the loading status of individual air filters of the air filter device, and allows a user to efficiently and accurately determine the actual service life, and to optimize the change interval of the air filters of the air filter device.

According to one aspect of the disclosure, there is provided an air filtration system for filtering air of an enclosed volume, the air filtration system comprising, a channel for receiving external air external to the enclosed volume; a recirculation channel for receiving recirculated air from the enclosed volume, the recirculation channel connected to the channel at a junction to provide the recirculated air from the enclosed volume to the channel; an air filter device for filtering an air flow into the enclosed volume, the air flow comprising at least one of the external air and the recirculated air, wherein the air filter device is arranged in relation to the the channel and/or the recirculation channel (for example within or between the channel and/or the recirculation channel); and an electronic control unit for determining a loading status of at least one air filter of the air filter device, the electronic control unit configured to obtain: a first parameter indicative of a level of particulate pollution in the external air, a second parameter indicative of a level of particulate pollution in the recirculated air, a third parameter indicative of a flow of the external air in the channel, a fourth parameter indicative of a flow of the recirculated air in the recirculation channel, and a fifth parameter indicative of an efficiency of the at least one filter of the air filter device, wherein the electronic control unit is configured to output the loading status of the at least one air filter of the air filter device based on, the first parameter, second parameter, third parameter, fourth parameter, and fifth parameter as inputs.

In various embodiments, the air filter device comprises a first air filter and a second air filter, the first air filter having a first particulate size filtration profile that differs from a second particulate size filtration profile of the second air filter.

In various embodiments, the first air filter and the second air filter may each be arranged within the channel, downstream to the junction at which the recirculation channel connects to the channel, to filter the air flow comprising the external air and the recirculated air.

In various embodiments, the first air filter may be arranged within the channel, upstream to the junction at which the recirculation channel connects to the channel, to filter the external air to provide a filtered external air, and the second air filter is arranged within the channel, downstream to the junction at which the recirculation channel connects to the channel, to filter the air flow comprising the recirculated air, and the filtered external air.

In various embodiments, the first air filter may be arranged within the recirculation channel, to filter the recirculated air to provide a filtered recirculated air, and the second air filter is arranged within the channel, downstream to the junction at which the recirculation channel connects to the channel, to filter the air flow comprising the external air, and the filtered recirculated air.

In various embodiments, the first air filter may be arranged within the enclosed volume, to filter the recirculated air within the enclosed volume to provide a filtered recirculated air, and the second air filter is arranged within the channel, downstream to the junction at which the recirculation channel connects to the channel, to filter the air flow comprising the external air, the filtered recirculated air, and the recirculated air.

In various embodiments, the air filtration system further comprises at least one bypass, configured to selectively bypass the first air filter and/or to selectively bypass the second air filter, of the air filter device.

In various embodiments, the air filtration system further comprises a flow ratio adjustment device arranged at the junction at which the recirculation channel connects to the channel, wherein the flow ratio adjustment device is configured to adjust a ratio of the external air, the filtered external air, the recirculated air and/or the filtered recirculated air, of the air flow through the air filter device. In some embodiments, the flow ratio adjustment device comprises at least one moveable flap.

In various embodiments, the air filtration system further comprises at least one blower device arranged within or between the channel and/or the recirculation channel, wherein the at least one blower device is configured to provide an adjustable air flow through the at least one air filter of the air filter device.

In various embodiments, the enclosed volume is a cabin of a vehicle.

According to another aspect of the disclosure, there is provided a vehicle comprising the air filtration system according to the various embodiments of the disclosure.

According to yet another aspect of the disclosure, there is provided a control device for an air filtration system for filtering air of an enclosed volume, the control device configured to determine a loading status of at least one air filter of an air filter device of the air filtration system, the control device comprising an electronic control unit in signal or data communication with a memory having instructions stored therein, the instructions, when executed by the electronic control unit, causes the electronic control unit to obtain: a first parameter indicative of a level of particulate pollution in an external air external to the enclosed volume; a second parameter indicative of a level of particulate pollution in a recirculated air; a third parameter indicative of a flow of the external air in the channel; a fourth parameter indicative of a flow of the recirculated air in the recirculation channel; and a fifth parameter indicative of an efficiency of the at least one filter of the air filter device, wherein the electronic control unit is configured to output the loading status of the at least one air filter of the air filter device based on, the first parameter, second parameter, third parameter, fourth parameter, and fifth parameter as inputs.

According to yet another aspect of the disclosure, there is provided a method for operating an air filtration system for filtering air of an enclosed volume, wherein the air filtration system comprises, a channel for receiving external air external to the enclosed volume; a recirculation channel for receiving recirculated air from the enclosed volume, the recirculation channel connected to the channel at a junction to provide the recirculated air from the enclosed volume to the channel; an air filter device for filtering an air flow into the enclosed volume, the air flow comprising at least one of the external air and the recirculated air, wherein the air filter device is arranged within or between the channel and/or the recirculation channel; and an electronic control unit for determining a loading status of at least one air filter of the air filter device, wherein the method comprises the steps of: obtaining, by the electronic control unit, a first parameter indicative of a level of particulate pollution in the external air; obtaining, by the electronic control unit, a second parameter indicative of a level of particulate pollution in the recirculated air; obtaining, by the electronic control unit, a third parameter indicative of a flow of the external air in the channel; obtaining, by the electronic control unit, a fourth parameter indicative of a flow of the recirculated air in the recirculation channel; obtaining, by the electronic control unit, a fifth parameter indicative of an efficiency of the at least one air filter of the air filter device; and outputting, by the electronic control unit, the loading status of the at least one air filter of the air filter device based on, the first parameter, second parameter, third parameter, fourth parameter, and fifth parameter as inputs.

In various embodiments, the air filter device comprises a first air filter and a second air filter, the first air filter having a first particulate size filtration profile that differs from a second particulate size filtration profile of the second air filter

In various embodiments, the first air filter and the second air filter may be each arranged within the channel, downstream to the junction at which the recirculation channel connects to the channel, to filter the air flow comprising the external air and the recirculated air.

In various embodiments, the first air filter may be arranged within the channel, upstream to the junction at which the recirculation channel connects to the channel, to filter the external air to provide a filtered external air, and wherein the second air filter may be arranged within the channel, downstream to the junction at which the recirculation channel connects to the channel, to filter the air flow comprising the recirculated air, and the filtered external air.

In various embodiments, the first air filter may be arranged within the recirculation channel, to filter the recirculated air to provide a filtered recirculated air, and wherein the second air filter may be arranged within the channel, downstream to the junction at which the recirculation channel connects to the channel, to filter the air flow comprising the external air, and the filtered recirculated air.

In various embodiments, the first air filter may be arranged within the enclosed volume, to filter the recirculated air within the enclosed volume to provide a filtered recirculated air, and wherein the second air filter may be arranged within the channel, downstream to the junction at which the recirculation channel connects to the channel, to filter the air flow comprising the external air, the filtered recirculated air, and the recirculated air.

According to yet another aspect of the disclosure, there is provided a computer program product, comprising software instructions which when executed on the electronic control unit, causes the electronic control unit to execute the steps of the method for operating the air filtration system for filtering air of an enclosed volume.

While the description the system and filter device comprises the filter, it is also envisaged that the system and/or the filter device comprises a replaceable filter, and/or a receptacle or holder for a filter. Therefore the disclosure also relates to the system and filter device for, but not necessarily comprising, the filter (also known as filter elements).

**Brief Description of Drawings**

The drawings show:

- FIG. 1 shows an exemplary schematic illustration of an air filtration system 100 for filtering air of an enclosed volume 102, including an electronic control unit 150 configured to determine a loading status of at least one air filter 142, 144, 146, of the air filter device 140;
- FIG. 2A shows a schematic illustration of an air filtration system 200A for filtering air of an enclosed volume 102, in accordance with an embodiment of the disclosure;
- FIG. 2B shows a schematic illustration of the air filtration system 200B for filtering air of an enclosed volume 102, in accordance with another embodiment of the disclosure;
- FIG. 2C shows a schematic illustration of the air filtration system 200C for filtering air of an enclosed volume 102, in accordance with another embodiment of the disclosure;
- FIG. 2D shows a schematic illustration of the air filtration system 200D for filtering air of an enclosed volume 102, in accordance with another embodiment of the disclosure;
- FIG. 3 shows an exemplary schematic illustration of a control device 300 for an air filtration system for filtering air of an enclosed volume, the control device 300 configured to determine a loading status of at least one air filter of an air filter device of the air filtration system, in accordance with another aspect of the disclosure; and
- FIG. 4 shows an exemplary flowchart of a method 400 for operating an air filtration system for filtering air of an enclosed volume comprising an electronic control unit for determining a loading status of at least one air filter of the air filter device, in accordance with another aspect of the disclosure.

**Detailed Description**

The following detailed description refers to the accompanying drawings that show, by way of illustration, specific details and embodiments in which the disclosure may be practiced. These embodiments are described in sufficient detail to enable those skilled in the art to practice the disclosure. Other embodiments may be utilized and structural, and logical changes may be made without departing from the scope of the disclosure. The various embodiments are not necessarily mutually exclusive, as some embodiments can be combined with one or more other embodiments to form new embodiments.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

In the context of various embodiments, the articles "a", "an" and "the", and the term "at least one" as used with regard to a feature or element include a reference to one or more of the features or elements. As used herein, the term "and/or" includes any and all combinations of one or more of the associated listed items.

Throughout the description, the term "air filtration system", as used herein, refers to a filtration system for filtering, e.g. purifying or decontamination, air of or within an enclosed volume. In some embodiments, the air filtration system refers to the air filtration system for a vehicle which provides air distribution, filtration and ventilation to a cabin of a vehicle. The air filtration system may also be referred to as the HVAC system of the vehicle. In some other embodiments, the air filtration system refers to an air quality management system for an enclosed space, such as a building or a room.

Throughout the description, the term "enclosed volume", as used herein, refers to an enclosed space or area that contains air which may be filtered by the air filtration system of the disclosure. In some embodiments, the enclosed volume may be a cabin of a vehicle. In some other embodiments, the enclosed volume may be an enclosed space, such as a space of a building or a room.

Throughout the description, the term "recirculation channel", as used herein, refers to a channel which receives air, which may be filtered by the air filter device of the system, from the enclosed volume.

Throughout the description, the term "air filter device", as used herein, refers to a device suitable for filtering and removing one or more components, e.g. particulate matter such as pollutants, in the air. In various embodiments, the air filter device may include at least one air filter, preferably a plurality of air filters.

Throughout the description, the term "obtain", as used herein, refers to the electronic control unit which actively obtains the inputs, or passively receives inputs from the air filter device and/or one or more measurement devices of the air filtration system. The term obtain may also refer to the electronic control unit, which receives or obtains inputs from a communication interface, e.g. user interface, a server, or via a memory, a register, and/or an analog-to-digital port.

Throughout the description, the term "a level of particulate pollution", as used herein, refers to a concentration of particulate matter, such as pollutants, in the external air and/or the recirculated air. In other words, the term a level of particulate pollution may indicate of a particulate mass concentration or pollutant concentration in the external air or the recirculated air.

Throughout the description, the term "electronic control unit", as used herein, refers to a processor, e.g. a circuit, including analog circuits or components, digital circuits or components, hybrid circuits or components. Any other kind of implementation of the respective functions which will be described in more detail below may also be understood as a "circuit" in accordance with an alternative embodiment. A digital circuit may be understood as any kind of logic implementing entity, which may be a special purpose circuitry or a processor executing software store in a memory, or a firmware.

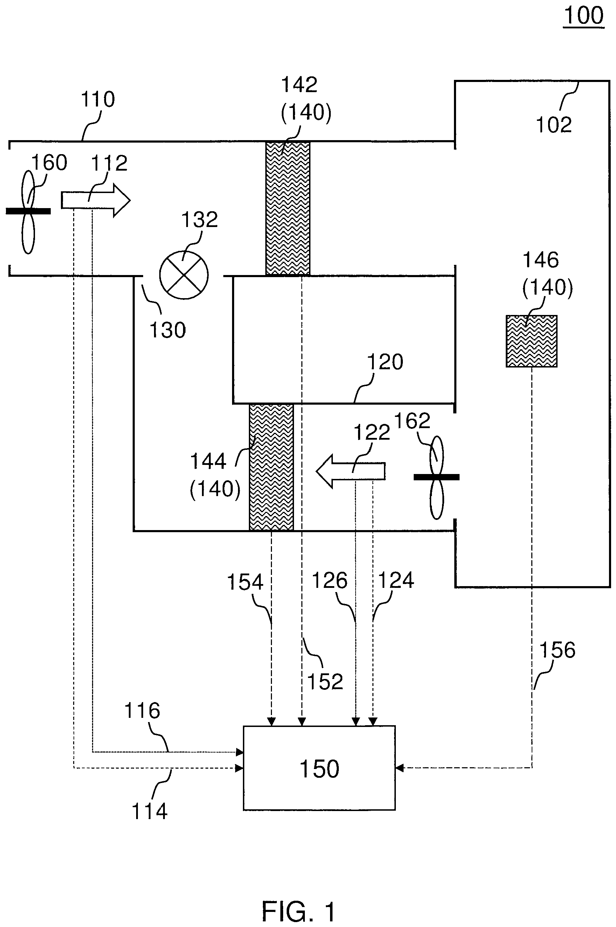

FIG. 1 shows an exemplary schematic illustration of an air filtration system 100 for filtering air of an enclosed volume 102, including an electronic control unit 150 configured to determine a loading status of at least one air filter 142, 144, 146, of the air filter device 140.

In some embodiments, the enclosed volume may be the cabin of a vehicle. The vehicle may be a passenger or agricultural vehicle, or may refer to an aircraft or a watercraft. In some other embodiments, the enclosed volume may be an enclosed space of an area, such as a building or a room.

Referring to FIG. 1, the air filtration system 100 includes a channel 110 for receiving external air 112 which is external to the enclosed volume 102. The external air may refer to air from the ambient environment, such as air external to the cabin of the vehicle, or air external to the building or room. In various embodiments, a first blower device 160 may be arranged within the channel 110 for adjusting a flow of the external air 112 through the channel 110. While the first blower device 160 is depicted to be positioned at one end, e.g. the entrance of the channel 110, embodiments of said position are not limited thereto, and the first blower device 160 may be arranged anywhere in the channel 110, as will be discussed below.

The air filtration system 100 includes a recirculation channel 120 for receiving recirculated air 122 from the enclosed volume 102, which is connected to the channel 110 at a junction 130, thereby allowing the recirculated air 122 from the enclosed volume 102 to be provided to the channel 110. While the recirculation channel 120 is depicted as an L-shaped channel including one branch which is connected to the enclosed volume 102, and another branch which is connected to the channel 110 at the junction 130, embodiments of the shape of the recirculation channel 120 is not limited thereto, and the recirculation channel 120 may be of any shape or dimension, which is suitable performing the aforementioned function.

As shown in FIG. 1, a flow ratio adjustment device 132 may be positioned at or in proximity of the junction 130 to adjust a ratio of the recirculated air 122 that is provided to channel 110. In some embodiments, the flow ratio adjustment device 132 may be configured to adjust the ratio of external air 112 and recirculated air 122 through flows through the air filtration system 100. For example, in an embodiment, the flow ratio adjustment device 132 may allow only external air 112 to flow within the channel 110, and in another embodiment, the flow ratio adjustment device 132 may reduce or increase the proportion of recirculated air 122 that enters the channel 110. In the air filtration system 100, the flow ratio adjustment device 132 may include at least one moveable flap, for example, a valve configured to control the flow of the recirculated air 122 into the channel 110. In some embodiments, the at least one moveable flap may be configured as a one-way valve that provides a one-way flow of the recirculated air 122 into the channel 110.

In various embodiments, a second blower device 162 may be arranged within the recirculation channel 120 for adjusting a flow of the recirculated air 122 through the recirculation channel 120. While the second blower device 162 is arranged at or in proximity to one end, e.g. the end at which the recirculation channel 120 connects to the enclosed area 102, embodiments of the disclosure are not limited thereto, and the second blower device 162 may be positioned anywhere in the recirculation channel 120 and/or the enclosed volume 102, as will be discussed below.

The air filtration system 100 further includes an air filter device 140 for filtering an air flow into the enclosed volume 102, the air filter device 140 arranged within or between the channel 110 and/or the recirculation channel 120. In various embodiments, the air flow comprises at least one of the external air 112 and the recirculated air 122, for example, a mixture of the external air 112 and the recirculated air 122.

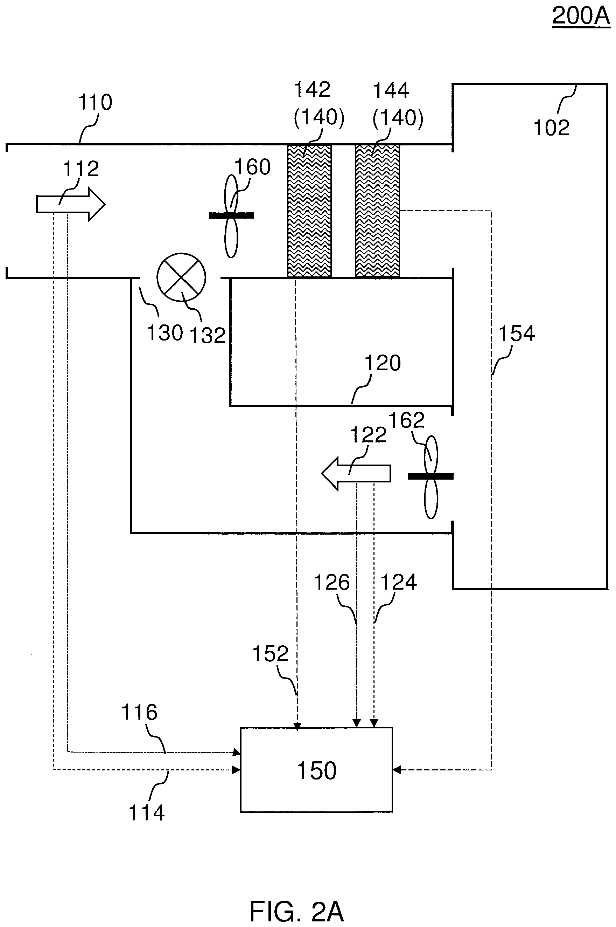

The air filter device 140 includes at least one air filter, preferably a plurality of air filters. As shown in FIG. 1, the air filter device 140 may include three air filters, a first air filter 142, which may be arranged within the channel 110, a second air filter 144 which may be arranged within the recirculation channel 120, and a third air filter 146, positioned between the channel 110 and the recirculation channel 120. While FIG. 1 shows the air filter device 140 including the first 142, second 144, and third 146 air filters, embodiments of the disclosure are not limited thereto, and the air filter device 140 may include more than three air filters in various placements within or between the channel 110 and/or the recirculation channel 120. The various arrangements of each air filter of the air filter device 140 and the determination of the loading status of said air filter, will be discussed with reference to FIGS. 2A to 2D.

In various embodiments, the air filtration system 100 may further include at least one bypass, configured to selectively bypass the first air filter 142, to selectively bypass the second air filter 144, and/or to selectively bypass the third air filter 146. The bypass may be a physical bypass channel configured to allow the air flow to bypass the first 142, second 144 and/or third 146 air filter, or may be controlled via the electronic control unit 150 of the system 100.

The air filtration system 100 further includes an electronic control unit 150 for determining a loading status of at least one air filter, e.g. first 142, second 144, and third 146 air filter, of the air filter device 140, and is configured to obtain: a first parameter 114 indicative of a level of particulate pollution in the external air 112; a second parameter 124 indicative of a level of particulate pollution in the recirculated air 122; a third parameter 116 indicative of a flow of the external air 112 in the channel 110; a fourth parameter 126 indicative of a flow of the recirculated air 122 in the recirculation channel 120; and a fifth parameter 152, 154, 156, indicative of an efficiency of the at least one air filter, e.g. a fifth parameter 152 indicative of an efficiency of the first air filter 142, a fifth parameter 154 indicative of an efficiency of the second air filter 144, and a fifth parameter 156 indicative of an efficiency of the third air filter 146, of the air filter device 140. The electronic control unit 150 is further configured to output the loading status of the at least one air filter, e.g. first 142, second 144, and third 146 air filter, of the air filter device 140 based on the first parameter 114, second parameter 124, third parameter 116, fourth parameter 126, and fifth parameter 152, 154, 156 as inputs. In other words, the loading status may be calculated as a mathematical formula or function of the first parameter 114, second parameter 124, third parameter 116, fourth parameter 126, and fifth parameter 152, 154, 156.

In various embodiments, the first parameter 114 and second parameter 124 indicative of a level of particulate pollution in the external air 112 and recirculated air 122, may refer to the concentration of particulate matter or pollutant concentration in the external air 112 and recirculated air 122, respectively. In the disclosure, the first parameter 114 may be referred to as a particulate matter pollution level of the external air 112, and the second parameter 124 may be referred to as a particulate matter pollution level of the recirculated air 122. In some embodiments, the first parameter 114 and the second parameter 124 may be measured using one or more air quality measuring and monitoring instruments, such as, but not limited to, aerosol photometers or nephelometers. In some other embodiments, the first parameter 114 and the second parameter 124 may be input via a user interface, or obtained via virtual servers, e.g. a cloud server.

In various embodiments, the third parameter 116 and fourth parameter 126 indicative of a flow of the external air 112 in the channel 110, and recirculated air 122 in the recirculation channel 120, respectively, may refer to the volumetric or mass flow rate of external air 112 and recirculated air 122 within the respective channel 110 and recirculation channel 120. As shown in FIG. 1, the flow of the external air 112 and the recirculated 122 may be adjusted by the first blower 160 and/or the second blower 162, respectively. In the disclosure, the third parameter 116 may be referred to as an external airflow level, and the fourth parameter 126 may be referred to as a recirculation airflow level. In various embodiments, the third parameter 116 and fourth parameter 126 may be measured using one or more airflow meters, e.g. anemometers, or may be input via a user interface, or obtained via virtual servers, e.g. a cloud server.

In some embodiments, the third parameter 116 and fourth parameter 126 may be represented as a ratio of the flow of the external air 112 to the flow of the recirculated air 122. That is, the electronic control unit 150 may determine the loading status of the at least one filter, e.g. first 142, second 144, and third 146 air filter, of the air filter device 140 based on the first parameter 114, second parameter 124, fifth parameter 152, 154, 156 for a respective one of the first 142, second 144, and third 146 air filters, and a ratio of the flow of external air 112 to the flow of recirculated air 122.

In various embodiments, the fifth parameter 152, 154, 156 indicative of an efficiency of the at least one air filter, e.g. first 142, second 144, and third 146 air filter, may refer to an efficiency level of said first 142, second 144, and third 146 air filter. In various embodiments, the fifth parameter 152, 154, 156 may be input via a user interface or obtained via virtual servers, e.g. a cloud server. It is contemplated that the electronic control unit 150 may be configured to derive the fifth parameter 152, 154, 156 based on inputs related to measurements of the efficiency level of the at least one air filter, e.g. first 142, second 144, and third 146 air filters.

In various embodiments, the loading status of at the least one air filter, first 142, second 144, and third 146 air filters, of the air filter device 140 may refer to the total particulate matter or total pollutant mass that flows through or is collected by the first 142, second 144, and third 146 air filters of the air filter device 140. In other words, the loading status for each air filter, e.g. first 142, second 144, and third 146 air filter, may refer to the total amount of particulate pollution collected by said air filter 142, 144, 146. It is contemplated that the loading status may also include: a parameter of a remaining useful life of the air filter; a parameter of the loading rate of the air filter; a parameter of the leakage rate of the air filter; and a parameter of a used life of the air filter.

In various embodiments, each air filter of the air filter device 140 may have a particulate size filtration profile that differs to another air filter of the air filter device 140. For example, the first air filter 142 may have a first particulate size filtration profile that differs from a second particulate size filtration profile, of the second air filter 144, and differs from a third particulate size filtration profile of the third air filter 146. For example, the first air filter 142 may be a PM2.5 filter; the second air filter 144 may be a PM 5 filter; and the third air filter 146 may be a PM 10 filter. In another example, the first air filter 142 may be configured to focus filtration of high diameter particles, i.e. diameter above 1 micrometers; the second air filter 144 may be configured to focus filtration of particles with a diameter lower than 1 micrometers, i.e. PM1 ; and the third air filter 146 may be configured to focus filtration of low diameter particles, e.g. ultrafine particles below 0,1 micrometers in diameter. These particle sizes and filter types are for pristine filters. The particulate size filtration behavior of any of the filter aforementioned might also change with time, under the influence of loading the filter, humidity or filter aging. This influence might also be predicted based on the estimated loading.

FIG. 2A shows a schematic illustration of an air filtration system 200A for filtering air of an enclosed volume 102, in accordance with an embodiment of the disclosure. The air filtration system 200A may be based on the air filtration system 100 described with reference to FIG. 1 and repeated descriptions will be omitted for conciseness.

Referring to FIG. 2A, the air filter device 140 may include a first air filter 142 and a second air filter 144, each arranged within the channel 110, downstream to the junction 130 at which the recirculation channel 120 connects to the channel 110. The air filter device 140 having the first air filter 142 having the first particulate size filtration profile, and second air filter 144 having the second particulate size filtration profile, may therefore filter an air flow comprising a mixture of the external air 112 received by the channel 110, and the recirculated air 122 from the enclosed volume 102 which is received by the recirculation channel 120.

In various embodiments, the flow ratio adjustment device 132 arranged at the junction 130 may adjust the ratio of the air flow comprising the external air 112 and the recirculated air 122, which flows through the first 142 and second 144 air filters. The air filtration system 200A may also include the second blower 162 which may adjust the flow of recirculated air 122 in the recirculation channel 120, and the first blower 169 which may adjust the flow comprising the external air 120 and recirculated air 122, provided to the first 142 and second 144 air filters of the air filter device 140.

In some embodiments, the air filtration system 200A may further include a bypass configured to selectively bypass the first air filter 142 and/or the second air filter 144 of the air filter device 140. For example, the air filtration system 200A may include a bypass channel for receiving the air flow comprising the external air 112 and recirculated air 122 and accordingly, the air flow may not be filtered by the first 142 and/or the second 144 air filters of the air filter device 140.

As described above, the loading status of each of the first 142 and second 146 air filters of the air filter device 140 may be determined based on the first parameter 114, second parameter 124, third parameter 116, fourth parameter 126 and the fifth parameter 152, 154 indicative of an efficiency of the first air filter 142 and second air filter 144, respectively.

The loading status of the first air filter 142 may therefore be calculated according to Equation (1) (Eqn(1)):

$$M_1 = \int_{t=0}^{t=\tau} [(PM_{ext} \times Airflow_{ext} + PM_{recirc} \times Airflow_{recirc}) \times Eff_1 \times BP_1] \, dt;$$

and the loading status of the second air filter 144 may be calculated according to Equation (2) (Eqn(2)):

$$M_2 = \int_{t=0}^{t=\tau} [(PM_{ext} \times Airflow_{ext} + PM_{recirc} \times Airflow_{recirc}) \times (1 - Eff_1)^{BP_1} \times Eff_2 \times BP_2] \, dt$$

where $M_1$ refers to the loading status of the first air filter 142; $M_2$ refers to the loading status of the second air filter 144; $\tau$ refers to the current time where the mass is getting evaluated; t refers to the time the first air filter 142 and/or the second air filter 144 are operational; $PM_{ext}$ refers to the level of particulate pollution in the external air 112, e.g. first parameter 114; $Airflow_{ext}$ refers to the flow of external air 112, e.g. third parameter 116; $PM_{recirc}$ refers to the particulate pollution in the recirculated air 122, e.g. second parameter 124; $Airflow_{recirc}$ refers to the flow of recirculated air 122, e.g. fourth parameter 126; $Eff_1$ and $Eff_2$ refer to the efficiency of the first air filter 142 and second air filter 144, e.g. fifth parameter 152 for the first air filter 142, and fifth parameter 154 for the second air filter 144, respectively; and $BP_1$ and $BP_2$ refers to the bypassing of the first air filter 142 and/or the second air filter 144, respectively. For example, if the air flow is filtered through the first air filter 142, $BP_1$ may be assigned a value of 1, i.e. $BP_1 = 1$. Alternatively, if the air flow bypasses the first air filter, $BP_1$ may be assigned a value of 0, i.e. $BP_1 = 0$. Similarly, a value for $BP_2$ may be assigned dependent on whether the air flow bypasses the second air filter 144, i.e. $BP_2 = 1$ or $BP_2 = 0$.

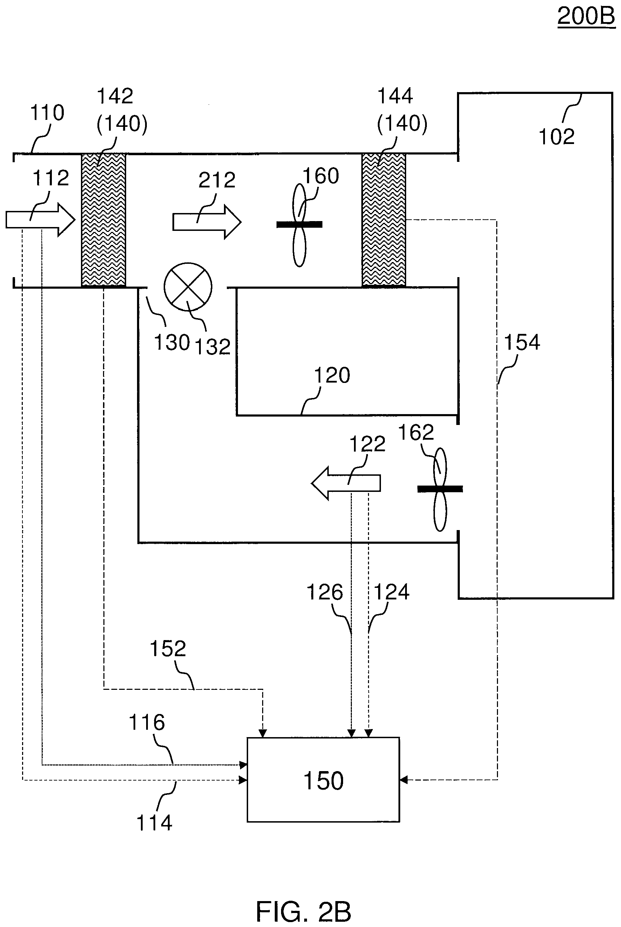

FIG. 2B shows a schematic illustration of the air filtration system 200B for filtering air of an enclosed volume 102, in accordance with another embodiment of the disclosure. The air filtration system 200B may be based on the air filtration system 100 described with reference to FIG. 1 and repeated descriptions will be omitted for conciseness.

Referring to FIG. 2B, the first air filter 142 may be arranged within the channel 110 upstream to the junction 130 at which the recirculation channel 120 connects to the channel 110, to filter the external air 112 to provide a filtered external air 212. That is, the external air 112 may be filtered by the first air filter 142 having the first particulate size filtration profile to provide the filtered external 212. The second air filter 144 may be arranged within the channel 110, downstream to the junction 130 at which the recirculation channel 120 connects to the channel 110, and may therefore filter the air flow comprising the filtered external air 212 and the recirculated air 122 from the enclosed volume 102, which may be provided by the recirculation channel 120. In other words, the external air 112 may first be filtered by the first air filter 142 having the first particulate size filtration profile, and the second air filter 144 having the second particulate size filtration profile may be configured to filter a ratio of the filtered external air 212 and recirculated air 122.

As shown in FIG. 2B, the flow ratio adjustment device 132 may be configured to adjust a ratio of the filtered external air 212 and the recirculated air 122 through the second air filter 144; and the first blower device 160 which is shown to be positioned between the first 142 and second 144 air filters of the air filter device 140 and may be configured to adjust the air flow of the filtered external air 212 and the recirculated air 122 through the second air filter 144. In some embodiments, the system 200B may further include at least one bypass to selectively bypass the first air filter 142 and/or the second air filter 144.

In system 200B, the loading status of each of the first 142 and second 146 air filters of the air filter device 140 may be determined based on the first parameter 114, second parameter 124, third parameter 116, fourth parameter 126 and the fifth parameter 152, 154 indicative of an efficiency of the first air filter 142 and second air filter 144, respectively.

The loading status of the first air filter 142 may therefore be calculated according to Equation (3) (Eqn (3)):

$$M_1 = \int_{t=0}^{t=\tau} [PM_{ext} \times Airflow_{ext} \times Eff_1 \times BP_1]\, dt;$$

and the loading status of the second air filter 144 may be calculated according to Equation (4) (Eqn(4)):

$$M_2 = \int_{t=0}^{t=\tau} [(PM_{ext} \times Airflow_{ext} \times \left(1 - Eff_1\right)^{BP_1} + PM_{recirc} \times Airflow_{recirc}) \times Eff_2 \times BP_2]\, dt;$$

where $M_1$ refers to the loading status of the first air filter 142; $M_2$ refers to the loading status of the second air filter 144; $\tau$ refers to the current time where the mass is getting evaluated; t refers to the time the first air filter 142 and/or the second air filter 144 are operational; $PM_{ext}$ refers to the level of particulate pollution in the external air 112, e.g. first parameter 114; $Airflow_{ext}$ refers to the flow of external air 112, e.g. third parameter 116; $PM_{recirc}$ refers to the particulate pollution in the recirculated air 122, e.g. second parameter 124; $Airflow_{recirc}$ refers to the flow of recirculated air 122, e.g. fourth parameter 126; $Eff_1$ and $Eff_2$ refer to the efficiency of the first air filter 142 and second air filter 144, e.g. fifth parameter 152 for the first air filter 142, and fifth parameter 154 for the second air filter 144, respectively; and $BP_1$ and $BP_2$ refers to the bypassing of the first air filter 142 and/or the second air filter 144, respectively. For example, if the air flow is filtered through the first air filter 142, $BP_1$ may be assigned a value of 1, i.e. $BP_1 = 1$. Alternatively, if the air flow bypasses the first air filter, $BP_1$ may be assigned a value of 0, i.e. $BP_1 = 0$. Similarly, a value for $BP_2$ may be assigned dependent on whether the air flow bypasses the second air filter 144, i.e. $BP_2 = 1$ or $BP_2 = 0$.

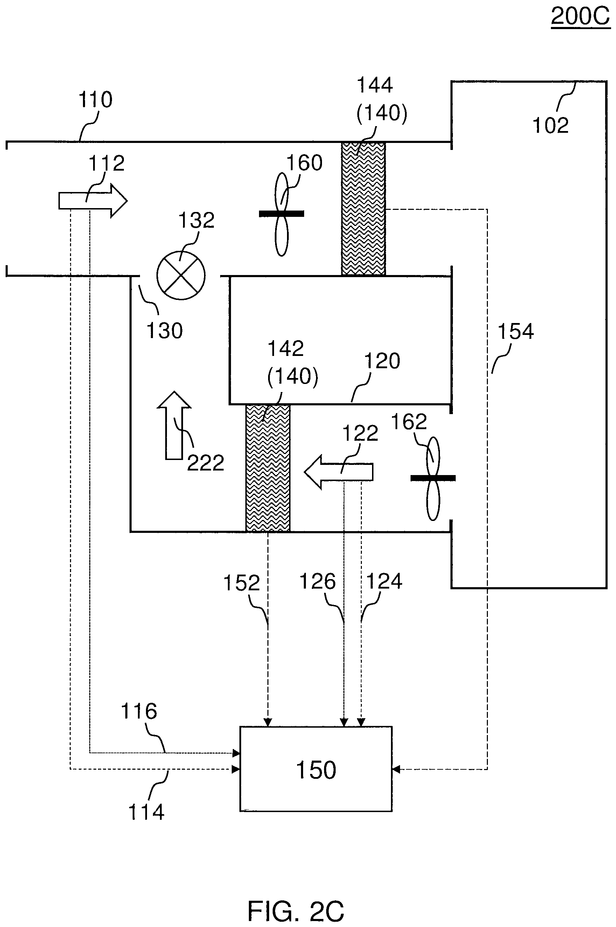

FIG. 2C shows a schematic illustration of the air filtration system 200C for filtering air of an enclosed volume 102, in accordance with another embodiment of the disclosure. The air filtration system 200C may be based on the air filtration system 100 described with reference to FIG. 1 and repeated description will be omitted for conciseness.

Referring to FIG. 2C, the first air filter 142 may be arranged within the recirculation channel 120, to filter the recirculated air 122 to provide a filtered recirculated air 222. The recirculated air 122 may therefore be filtered by the first air filter 142 having the first particulate size filtration profile and the filtered recirculated air 222 may be provided to the channel 110. The second air filter 144 may be arranged within the channel 110, downstream to the junction 130 at which the recirculation channel 110 connects to the channel 110. Accordingly, the second air filter 144 having the second particulate size filtration profile, may filter the air flow comprising the external air 112, and the filtered recirculated air 222.

In various embodiments, the flow ratio adjustment device 132 may adjust a ratio of the filtered recirculated air 222 and external air 112, and the first blower device 160 may be configured to adjust the air flow of the external air 112 and the filtered recirculated air 222 which passes through the second air filter 144. In addition, the second blower device 162 may be configured to adjust the flow of the recirculated air 122 as it passes through the first filter device 142. In some embodiments, the system 200C may further include at least one bypass configured to selectively bypass the first air filter 142 and/or the second air filter 144.

As described above, the loading status of the first 142 and second 146 air filter of the air filter device 140 may be determined based on the first parameter 114, second parameter 124, third parameter 116, fourth parameter 126 and the fifth parameter 152, 154 indicative of an efficiency of the first air filter 142, and/or the second air filter 144, respectively.

The loading status of the first air filter 142 may therefore be calculated according to Equation (5) (Eqn(5)):

$$M_1 = \int_{t=0}^{t=\tau} [PM_{recirc} \times Airflow_{recirc} \times Eff_1 \times BP_1] \, dt;$$

and the loading status of the second air filter 144 may be calculated according to Equation (6) (Eqn(6)):

$$M_2 = \int_{t=0}^{t=\tau} [(PM_{ext} \times Airflow_{ext} + PM_{recirc} \times Airflow_{recirc} \times (1 - Eff_1)^{BP_1}) \times Eff_2 \times BP_2] \, dt;$$

where $M_1$ refers to the loading status of the first air filter 142; $M_2$ refers to the loading status of the second air filter 144; t refers to the time the first air filter 142 and/or the second air filter 144 are operational; $\tau$ refers to the current time where the mass is getting evaluated; $PM_{ext}$ refers to the level of particulate pollution in the external air 112, e.g. first parameter 114; $Airflow_{ext}$ refers to the flow of external air 112, e.g. third parameter 116; $PM_{recirculated}$ refers to the particulate pollution in the recirculated air 122, e.g. second parameter 124; $Airflow_{recirculated}$ refers to the flow of recirculated air 122, e.g. fourth parameter 126; $Eff_1$ and $Eff_2$ refer to the efficiency of the first air filter 142 and second air filter 144, e.g. fifth parameter 152 for the first air filter 142, and fifth parameter 154 for the second air filter 144, respectively; and $BP_1$ and $BP_2$ refers to the bypassing of the first air filter 142 and/or the second air filter 144, respectively. For example, if the air flow is filtered through the first air filter 142, $BP_1$ may be assigned a value of 1, i.e. $BP_1 = 1$. Alternatively, if the air flow bypasses the first air filter, $BP_1$ may be assigned a value of 0, i.e. $BP_1 = 0$. Similarly, a value for $BP_2$ may be assigned dependent on whether the air flow bypasses the second air filter 144, i.e. $BP_2 = 1$ or $BP_2 = 0$.

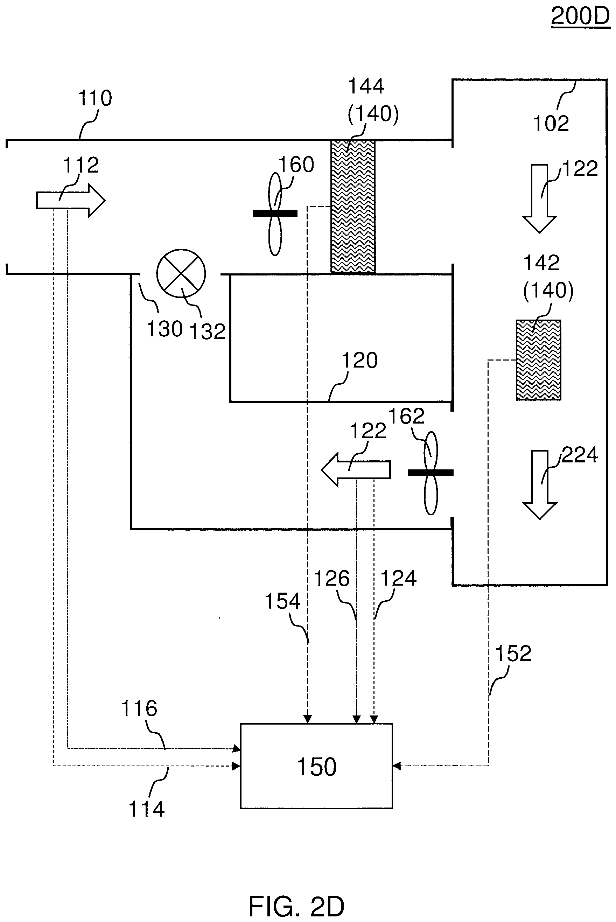

FIG. 2D shows a schematic illustration of the air filtration system 200D for filtering air of an enclosed volume 102, in accordance with another embodiment of the disclosure. The air filtration system 200D may be based on the air filtration system 100 described with reference to FIG. 1 and repeated descriptions will be omitted for conciseness.

Referring to FIG. 2D, the first air filter 142 may be arranged within an interior of the enclosed volume, such as the interior of a cabin of a vehicle, or an enclosed space of a building or a room. The first air filter 142 having the first particulate size filtration profile may therefore filter the internal filtration airflow, which is air circulating within the enclosed volume 102 to provide a filtered air 224. The filtered recirculated air 224, along with the recirculated air 122 within the enclosed volume 102 (that has not been filtered by the first air filter 142), may be provided to the recirculation channel 120 and further provided to the channel 110 via the connection between the recirculation channel 120 and the channel 110. In various embodiments, the second blower device 162 may adjust the air flow comprising the recirculated air 122 and the filtered recirculated air 224 that passes through the recirculation channel 120; and the flow ratio adjustment device 132 may adjust a ratio of the recirculated air 122 and the filtered recirculated air 224 provided to the channel 110.

As shown in FIG. 2D, the second air filter 144 may be arranged within the channel 110, downstream to the junction 130 at which the recirculation channel 120 connects to the channel 110. Since the channel 110 receives external air 112, the air flow comprising the external air 112, the filtered recirculated air 224 from the enclosed volume 102, and the recirculated air 122 from the enclosed volume 102, may be filtered by the second air filter 144 having the second particulate size filtration profile. In various embodiments, the first blower device 162 may adjust the air flow comprising the external air 112, the filtered recirculated air 224 and the recirculated air 122. In addition, in some embodiments, system 200D may further include at least one bypass configured to selectively bypass the first air filter 142 and/or the second air filter 144.

The loading status of the first 142 and second 144 air filters of the air filter device 140 in system 200D may be determined based on the first parameter 114, second parameter 124, third parameter 116, fourth parameter 126, and the fifth parameter 152, 154 indicative of the efficiency of the first air filter 142 and second air filter 144, respectively.

The loading status of the first air filter 142 may therefore be calculated according to Equation (7) (Eqn(7)):

$$M_1 = \int_{t=0}^{t=\tau} [PM_{recirc} \times Airflow_{internal\ filtration} \times Eff_1 \times BP_1] \, dt;$$

and the loading status of the second air filter 144 may be calculated according to Equation (8) (Eqn(8)):

$$M_2 = \int_{t=0}^{t=\tau} [(PM_{ext} \times Airflow_{ext} + PM_{recirc} \times Airflow_{recirc}) \times Eff_2 \times BP_2] \, dt;$$

where $M_1$ refers to the loading status of the first air filter 142; $M_2$ refers to the loading status of the second air filter 144; t refers to the time the first air filter 142 and/or the second air filter 144 are operational; $\tau$ refers to the current time where the mass is getting evaluated; $PM_{ext}$ refers to the level of particulate pollution in the external air 112, e.g. first parameter 114; $Airflow_{ext}$ refers to the flow of external air 112, e.g. third parameter 116; $PM_{recirc}$ refers to the particulate pollution in the recirculated air 122, e.g. second parameter 124; $Airflow_{recirc}$ refers to the flow of recirculated air 122, e.g. fourth parameter 126; $Airflow_{internal\ filtration}$ refers to an internal filtration airflow; $Eff_1$ and $Eff_2$ refer to the efficiency of the first air filter 142 (within the enclosed volume 102), and second air filter 144, e.g. fifth parameter 152 for the first air filter 142, and fifth parameter 154 for the second air filter 144, respectively; and $BP_1$ and $BP_2$ refers to the bypassing of the first air filter 142 and/or the second air filter 144, respectively. For example, if the air flow is filtered through the first air filter 142, $BP_1$ may be assigned a value of 1, i.e. $BP_1 = 1$. Alternatively, if the air flow bypasses the first air filter, $BP_1$ may be assigned a value of 0, i.e. $BP_1 = 0$. Similarly, a value for $BP_2$ may be assigned dependent on whether the air flow bypasses the second air filter 144, i.e. $BP_2 = 1$ or $BP_2 = 0$.

In various embodiments, the loading status of the first air filter 142 and the second air filter 144 may be further calibrated by a coefficient, e.g. experimental calibration factor, for determining the total particulate pollutant mass that flow through or is collected by the first 142, second 144 and/or third 146 air filters of the air filter device 140.

According to another aspect of the disclosure, there is provided a vehicle comprising the air filtration system 100, 200A, 200B, 200C, 200D described with reference to FIGS. 1 to 2D of the disclosure.

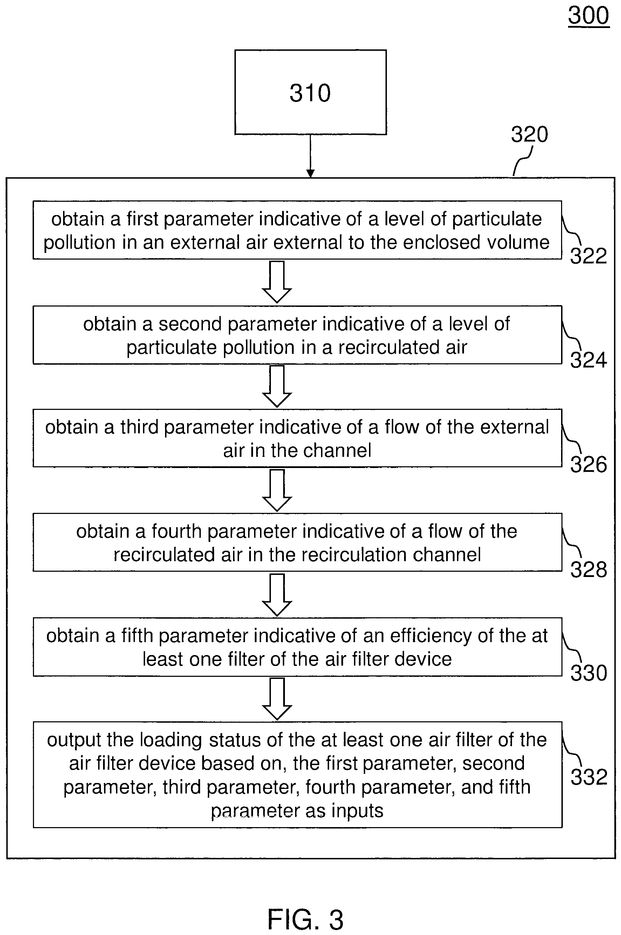

FIG. 3 shows an exemplary schematic illustration of a control device 300 for an air filtration system for filtering air of an enclosed volume, the control device 300 configured to determine a loading status of at least one air filter of an air filter device of the air filtration system, in accordance with another aspect of the disclosure. The control device 300 may be configured for the air filtration system 100, 200A, 200B, 200C, 200D described with reference to FIGS. 1 to 2D of the disclosure, and repeated description are omitted for brevity.

Referring to FIG. 3, the control device 300 includes an electronic control unit 320 in signal or data communication with a memory 310 having instructions stored therein, such that when executed by the electronic control unit 320, causes the electronic control unit 320 to: obtain a first parameter indicative of a level of particulate pollution in an external air external to the enclosed volume, e.g. a particulate matter pollution level of the external air (step 322); obtain a second parameter indicative of a level of particulate pollution in a recirculated air, e.g. a particulate matter pollution level of the recirculated air (step 324); obtain a third parameter indicative of a flow of the external air in the channel, e.g. external airflow level (step 326); obtain a fourth parameter indicative of a flow of the recirculated air in the recirculation channel, e.g. recirculated airflow level (step 328); obtain a fifth parameter indicative of an efficiency of the at least one filter of the air filter device, e.g. efficiency level of the at least one air filter (step 330); and to output the loading status of the at least one air filter of the air filter device based on, the first parameter, second parameter, third parameter, fourth parameter, and fifth parameter as inputs (step 332).

In various embodiments, the electronic control unit 320 may be configured to execute steps 322 to 332 in accordance with the electronic control unit 150 described in relation to the air filtration system 100, 200A, 200B, 200C, 200D of FIGS. 1 to 2D.

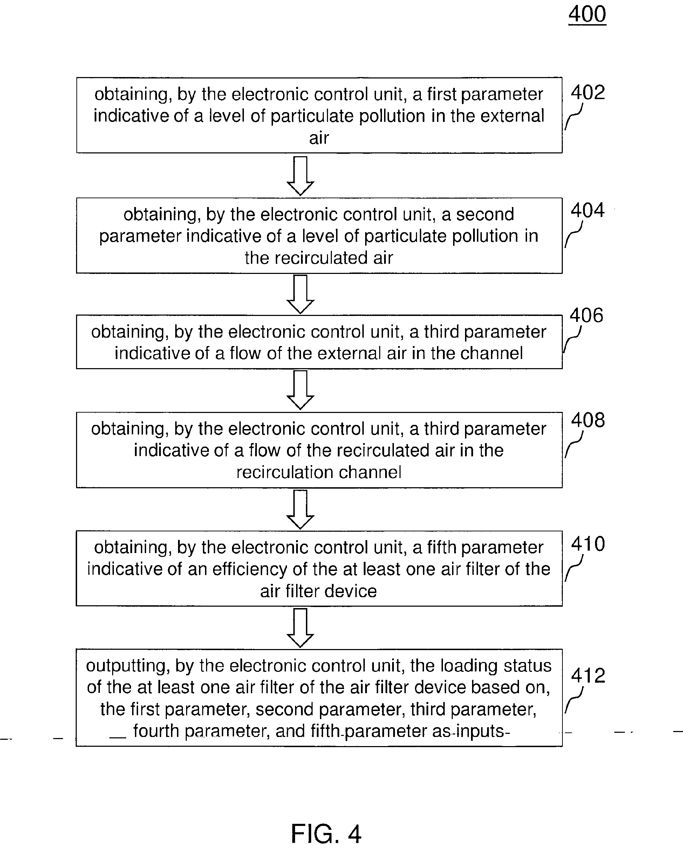

FIG. 4 shows an exemplary flowchart of a method 400 for operating an air filtration system for filtering air of an enclosed volume comprising an electronic control unit for determining a loading status of at least one air filter of the air filter device, in accordance with another aspect of the disclosure. The air filtration system may refer to the air filtration system 100, 200A, 200B, 200C, 200D described with reference to FIGS. 1 to 2D, which includes a channel for receiving external air external to the enclosed volume; a recirculation channel for receiving recirculated air from the enclosed volume, the recirculation channel connected to the channel at a junction to provide the recirculated air from the enclosed volume to the channel; an air filter device for filtering an air flow into the enclosed volume, the air flow comprising at least one of the external air and the recirculated air, wherein the air filter device is arranged within or between the channel and/or the recirculation channel; and the electronic control unit for determining a loading status of at least one air filter of the air filter device.

As shown in FIG. 4, the method 400, which may be executed by the electronic control unit, comprises the steps of: obtaining, by the electronic control unit, a first parameter indicative of a level of particulate pollution in the external air, e.g. a particulate matter pollution level of the external air (step 402); obtaining, by the electronic control unit, a second parameter indicative of a level of particulate pollution in the recirculated air, e.g. a particulate matter pollution level of the recirculated air (step 404); obtaining, by the electronic control unit, a third parameter indicative of a flow of the external air in the channel, e.g. external airflow level (step 406); obtaining, by the electronic control unit, a fourth parameter indicative of a flow of the recirculated air in the recirculation channel, e.g. recirculated airflow level (step 408); obtaining, by the electronic control unit, a fifth parameter indicative of an efficiency of the at least one air filter of the air filter device, e.g. efficiency level of the at least one air filter (step 410); and outputting, by the electronic control unit, the loading status of the at least one air filter of the air filter device based on, the first parameter, second parameter, third parameter, fourth parameter, and fifth parameter as inputs (step 412).

In various embodiments of method 400, the air filter device comprises a plurality of air filters, each having a particulate size filtration profile that differs to another air filter among the plurality of air filters. In some embodiments, the air filter device includes a first air filter and a second air filter, the first air filter having a first particulate size filtration profile that differs from a second particulate size filtration profile of the second air filter.

In an embodiment, the first air filter and the second air filter are each arranged within the channel, downstream to the junction at which the recirculation channel connects to the channel, to filter the air flow comprising the external air and the recirculated air. The arrangement of the first air filter and second air filter may be based on the air filtration system 200A described with reference to FIG. 2A and repeated descriptions are omitted for brevity. Accordingly, the loading status of the first air filter may be determined according to Equation (1), and the loading status of the second air filter may be determined according to Equation (2).

In another embodiment, the first air filter is arranged within the channel, upstream to the junction at which the recirculation channel connects to the channel, to filter the external air to provide a filtered external air, and the second air filter is arranged within the channel, downstream to the junction at which the recirculation channel connects to the channel, to filter the air flow comprising the recirculated air, and the filtered external air. The arrangement of the first air filter and second air filter may be based on the air filtration system 200B described with reference to FIG. 2B and repeated descriptions are omitted for brevity. Accordingly, the loading status of the first air filter may be determined according to Equation (3), and the loading status of the second air filter may be determined according to Equation (4).

In another embodiment, the first air filter is arranged within the recirculation channel, to filter the recirculated air to provide a filtered recirculated air, and the second air filter is arranged within the channel, downstream to the junction at which the recirculation channel connects to the channel, to filter the air flow comprising the external air, and the filtered recirculated air. The arrangement of the first air filter and second air filter may be based on the air filtration system 200C described with reference to FIG. 2C and repeated descriptions are omitted for brevity. Accordingly, the loading status of the first air filter may be determined according to Equation (5), and the loading status of the second air filter may be determined according to Equation (6).

In another embodiment, the first air filter is arranged within the enclosed volume, e.g. the interior of the enclosed volume, to filter the recirculated air within the enclosed volume to provide a filtered recirculated air, and the second air filter is arranged within the channel, downstream to the junction at which the recirculation channel connects to the channel, to filter the air flow comprising the external air, the filtered recirculated air, and the recirculated air. The arrangement of the first air filter and second air filter may be based on the air filtration system 200D described with reference to FIG. 2D and repeated descriptions are omitted for brevity. Accordingly, the loading status of the first air filter may be determined according to Equation (7), and the loading status of the second air filter may be determined according to Equation (8).

Various embodiments of the disclosure further provide a computer program product, comprising software instructions which when executed on the electronic control unit, causes the electronic control unit to execute steps 402 to 412 of method 400 described with reference to FIG. 4.

The present disclosure thus provides an improved air filtration system for filtering air of an enclosed volume, the system having an electronic control unit configured to determine the loading status of at least one air filter of the air filter device in real-time or near real time. Embodiments of the present disclosure allows a user to easily and accurately determine the loading status, in particular, the total particulate pollutant mass that is collected or flows through each air filter of the air filter device, to enable a user to efficiently determine the actual service life, and to optimize the change interval of the air filters of the air filter device.

While the disclosure has been particularly shown and described with reference to specific embodiments, it should be understood by those skilled in the art that various changes in form and detail may be made therein without departing from the scope of the disclosure as defined by the appended claims. The scope of the disclosure is thus indicated by the appended claims.

**Claims**

1. An air filtration system (100, 200A, 200B, 200C, 200D) for filtering air of an enclosed volume (102), the air filtration system (100, 200A, 200B, 200C, 200D) comprising

   a channel (110) for receiving external air (112) external to the enclosed volume (102);
   a recirculation channel (120) for receiving recirculated air (122) from the enclosed volume (102), the recirculation channel (120) connected to the channel (110) at a junction (130) to provide the recirculated air (122) from the enclosed volume (102) to the channel (110);
   an air filter device (140) for filtering an air flow into the enclosed volume (102), the air flow comprising at least one of the external air (112) and the recirculated air (122), wherein the air filter device (140) is arranged in relation to the channel (110) and/or the channel (120); and
   an electronic control unit (150) for determining a loading status of at least one air filter (142, 144, 146) of the air filter device (140), the electronic control unit (150) configured to obtain

   a first parameter (114) indicative of a level of particulate pollution in the external air (112),
   a second parameter (124) indicative of a level of particulate pollution in the recirculated air (122),

a third parameter (116) indicative of a flow of the external air (112) in the channel (110),
a fourth parameter (126) indicative of a flow of the recirculated air (122) in the recirculation channel (120), and
a fifth parameter (152, 154, 156) indicative of an efficiency of the at least one filter (142, 144, 146) of the air filter device (140),

wherein the electronic control unit (150) is configured to output the loading status of the at least one air filter (142, 144, 146) of the air filter device (140) based on, the first parameter (114), second parameter (124), third parameter (116), fourth parameter (126), and fifth parameter (152, 154, 156) as inputs.

2. The system (100, 200A, 200B, 200C, 200D) of claim 1, wherein the air filter device (140) comprises a first air filter (142) and a second air filter (144), the first air filter (142) having a first particulate size filtration profile that differs from a second particulate size filtration profile of the second air filter (144).

3. The system (100, 200A, 200B, 200C, 200D) of claim 2, further comprising
at least one bypass, configured to selectively bypass the first air filter (142), and/or to selectively bypass the second air filter (144), of the air filter device (140).

4. The system (100, 200A, 200B, 200C, 200D) of claim 2, wherein the first air filter (142) is arranged within the channel (110), upstream to the junction (130) at which the recirculation channel (120) connects to the channel (110), to filter the external air (112) to provide a filtered external air (212), and

wherein the second air filter (144) is arranged within the channel (110), downstream to the junction (130) at which the recirculation channel (120) connects to the channel (110), to filter the air flow comprising the recirculated air (122), and the filtered external air (212);
further comprising
a flow ratio adjustment device (132) arranged at the junction (130) at which the recirculation channel (120) connects to the channel (110),
wherein the flow ratio adjustment device (132) is configured to adjust a ratio of the external air (112), the filtered external air (212), the recirculated air (122) and/or the filtered recirculated air (222, 224), of the air flow through the air filter device (140).

5. The system (100, 200A, 200B, 200C, 200D) of claim 4, wherein the flow ratio adjustment device (132) comprises at least one moveable flap.

6. The system (100, 200A, 200B, 200C, 200D) of any one of claims 1 to 5, further comprising

at least one blower device (160, 162) arranged within or between the channel (110) and/or the recirculation channel (120),
wherein the at least one blower device (160, 162) is configured to provide an adjustable air flow through the at least one air filter (142, 144, 146) of the air filter device (140).

7. The system (100, 200A, 200B, 200C, 200D) of any one of claims 1 to 6, wherein the enclosed volume (102) is a cabin of a vehicle.

8. A vehicle comprising the air filtration system (100, 200A, 200B, 200C, 200D) according to any one of claims 1 to 7.

9. A control device (300) for an air filtration system for filtering air of an enclosed volume, the control device configured to determine a loading status of at least one air filter of an air filter device of the air filtration system, the control device comprising an electronic control unit (320) in signal or data communication with a memory (310) having instructions stored therein, the instructions, when executed by the electronic control unit (320), causes the electronic control unit (320) to obtain

a first parameter indicative of a level of particulate pollution in an external air external to the enclosed volume (322);
a second parameter indicative of a level of particulate pollution in a recirculated air (324);
a third parameter indicative of a flow of the external air in the channel (326);
a fourth parameter indicative of a flow of the recirculated air in the recirculation channel (328); and
a fifth parameter indicative of an efficiency of the at least one filter of the air filter device (330),

wherein the electronic control unit is configured to output the loading status of the at least one air filter of the air filter device based on, the first parameter, second parameter, third parameter, fourth parameter, and fifth parameter as inputs (332).

10. A method (400) for operating an air filtration system for filtering air of an enclosed volume, wherein the air filtration system comprises

a channel for receiving external air external to the enclosed volume;

a recirculation channel for receiving recirculated air from the enclosed volume, the recirculation channel connected to the channel at a junction to provide the recirculated air from the enclosed volume to the channel;

an air filter device for filtering an air flow into the enclosed volume, the air flow comprising at least one of the external air and the recirculated air, wherein the air filter device is arranged in relation to the channel and/or the recirculation channel; and

an electronic control unit for determining a loading status of at least one air filter of the air filter device, wherein the method (400) comprises the steps of

obtaining, by the electronic control unit, a first parameter indicative of a level of particulate pollution in the external air (402);

obtaining, by the electronic control unit, a second parameter indicative of a level of particulate pollution in the recirculated air (404);

obtaining, by the electronic control unit, a third parameter indicative of a flow of the external air in the channel (406);

obtaining, by the electronic control unit, a fourth parameter indicative of a flow of the recirculated air in the recirculation channel (408);

obtaining, by the electronic control unit, a fifth parameter indicative of an efficiency of the at least one air filter of the air filter device (410); and

outputting, by the electronic control unit, the loading status of the at least one air filter of the air filter device based on, the first parameter, second parameter, third parameter, fourth parameter, and fifth parameter as inputs (412).

11. The method (400) of claim 10, wherein the air filter device comprises a first air filter and a second air filter, the first air filter having a first particulate size filtration profile that differs from a second particulate size filtration profile of the second air filter.

12. The system (200A) of claim 2 or the method (400) of claim 11, wherein the first air filter (142) and the second air filter (144) are each arranged within the channel (110), downstream to the junction (130) at which the recirculation channel (120) connects to the channel (110), to filter the air flow comprising the external air (112) and the recirculated air (122).

13. The system (200B) of claim 2 or the method (400) of claim 11, wherein the first air filter (142) is arranged within the channel (110), upstream to the junction (130) at which the recirculation channel (120) connects to the channel (110), to filter the external air (112) to provide a filtered external air (212), and wherein the second air filter (144) is arranged within the channel (110), downstream to the junction (130) at which the recirculation channel (120) connects to the channel (110), to filter the air flow comprising the recirculated air (122), and the filtered external air (212).

14. The system (200C) of claim 2 or the method (400) of claim 11, wherein the first air filter (142) is arranged within the recirculation channel (120), to filter the recirculated air (122) to provide a filtered recirculated air (222), and wherein the second air filter (144) is arranged within the channel (110), downstream to the junction (130) at which the recirculation channel (120) connects to the channel (110), to filter the air flow comprising the external air (112), and the filtered recirculated air (222).

15. The system (200D) of claim 2 or the method (400) of claim 11, wherein the first air filter (142) is arranged within the enclosed volume (102), to filter the recirculated air (122) within the enclosed volume to provide a filtered recirculated air (224), and wherein the second air filter (144) is arranged within the channel (110), downstream to the junction (130) at which the recirculation channel (120) connects to the channel (110), to filter the air flow comprising the external air (122), the filtered recirculated air (224), and the recirculated air (122).

16. A computer program product, comprising software instructions which when executed on the electronic control unit, causes the electronic control unit to execute the steps of any one of claims 11 to 15.

FIG. 1

FIG. 2A

200B

FIG. 2B

200C

FIG. 2C

FIG. 2D

300

310

320

obtain a first parameter indicative of a level of particulate pollution in an external air external to the enclosed volume

322

obtain a second parameter indicative of a level of particulate pollution in a recirculated air

324

obtain a third parameter indicative of a flow of the external air in the channel

326

obtain a fourth parameter indicative of a flow of the recirculated air in the recirculation channel

328

obtain a fifth parameter indicative of an efficiency of the at least one filter of the air filter device

330

output the loading status of the at least one air filter of the air filter device based on, the first parameter, second parameter, third parameter, fourth parameter, and fifth parameter as inputs

332

FIG. 3

<u>400</u>

| obtaining, by the electronic control unit, a first parameter indicative of a level of particulate pollution in the external air | 402 |

⇩

| obtaining, by the electronic control unit, a second parameter indicative of a level of particulate pollution in the recirculated air | 404 |

⇩

| obtaining, by the electronic control unit, a third parameter indicative of a flow of the external air in the channel | 406 |

⇩

| obtaining, by the electronic control unit, a third parameter indicative of a flow of the recirculated air in the recirculation channel | 408 |

⇩

| obtaining, by the electronic control unit, a fifth parameter indicative of an efficiency of the at least one air filter of the air filter device | 410 |

⇩

| outputting, by the electronic control unit, the loading status of the at least one air filter of the air filter device based on, the first parameter, second parameter, third parameter, __ fourth parameter, and fifth parameter as inputs- | 412 |

FIG. 4

Europäisches
Patentamt

European
Patent Office

Office européen
des brevets

# EUROPEAN SEARCH REPORT

**Application Number**

EP 23 31 5202

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/180185 A1 (BELIMO HOLDING AG [CH]) 1 September 2022 (2022-09-01) * figures 1-8 * * page 18, line 22 – page 24, line 28 * | 1-6,9-16 | INV. B01D46/44 B01D46/00 |
| X | US 5 707 005 A (KETTLER JOHN P [US] ET AL) 13 January 1998 (1998-01-13) * figures 1-6 * * column 4, line 41 – column 23, line 35 * | 1-6,9-16 | |
| X | EP 1 695 752 A1 (BEHR GMBH & CO KG [DE]) 30 August 2006 (2006-08-30) * figures 1-2 * * paragraphs [0016] – [0023] * | 1-16 | |
| A | WO 2012/066453 A1 (KONINKL PHILIPS ELECTRONICS NV [NL]; VAN DER GRAAF TIMOTHY [NL] ET AL.) 24 May 2012 (2012-05-24) * figures 1-5B * * page 6, line 20 – page 10, line 24 * | 1-16 | |

**TECHNICAL FIELDS SEARCHED (IPC)**

B01D

The present search report has been drawn up for all claims

| Place of search | Date of completion of the search | Examiner |
|---|---|---|
| Munich | 4 October 2023 | Galiana López, Paula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 31 5202

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2023

| Patent document cited in search report | Publication date | Patent family member(s) | | Publication date |
|---|---|---|---|---|
| WO 2022180185 A1 | 01-09-2022 | NONE | | |
| US 5707005 A | 13-01-1998 | AU | 4966896 A | 14-08-1996 |
| | | US | 5564626 A | 15-10-1996 |
| | | US | 5590830 A | 07-01-1997 |
| | | US | 5707005 A | 13-01-1998 |
| | | WO | 9623177 A1 | 01-08-1996 |
| EP 1695752 A1 | 30-08-2006 | DE 102005008602 A1 | | 07-09-2006 |
| | | EP | 1695752 A1 | 30-08-2006 |
| WO 2012066453 A1 | 24-05-2012 | NONE | | |

For more details about this annex : see Official Journal of the European Patent Office, No. 12/82